# EUROPEAN PATENT SPECIFICATION

(11) **EP 1 391 434 B1**
(45) Date of publication and mention of the grant of the patent: **28.06.2006**
(21) Application number: 03024594.8
(22) Date of filing: 14.12.2001
(51) Int. Cl.: C03B 23/035, E03C 1/18, C03B 9/12

(54) **Method and apparatus for producing sink tops with integrated sinks by mouding a glass sheet**
Verfahren und Vorrichtung zum Herstellen einer Spülfläche mit integrierten Spülbecken durch Umformen eines Glastafels
Procédé et appareil pour la fabrication d'une planche à l'évier intégrée avec des éviers par moulage d'une feuile de verre

(30) Priority: 15.12.2000 IT bo20000727
(43) Date of publication of application: 25.02.2004
(62) Divisional of application: 01129812.2
(73) Proprietor: Porcellato, Guido, 31057 Cendon di Silea (IT)
(72) Inventor: Porcellato, Guido, 31057 Cendon di Silea (IT)
(74) Representative: Jorio, Paolo

(56) References cited:
- EP-A- 0 319 298
- US-A- 2 970 405
- PATENT ABSTRACTS OF JAPAN vol. 007, no. 135 (C-170), 11 June 1983 (1983-06-11) -& JP 58 049630 A (NIHON ITA GLASS KK), 23 March 1983 (1983-03-23)
- PATENT ABSTRACTS OF JAPAN vol. 004, no. 077 (C-013), 4 June 1980 (1980-06-04) -& JP 55 042259 A (NIPPON SHEET GLASS CO LTD), 25 March 1980 (1980-03-25)

## Description

The present invention relates to a method of producing glass sink tops with built-in sinks, and to a system implementing such a method.

More specifically, the present invention relates to a method and system for producing glass sink tops with built-in sinks for bathrooms and similar, to which the following description refers purely by way of example.

As is known, in recent years, there has been a considerable increase in the sale of glass sink tops featuring one or more sinks formed in one piece with the top itself, and which is due to the increasing popularity of such tops among interior designers, particularly as regards the design of bathrooms and similar. In fact, though extremely expensive to produce, glass sink tops have become a fashionable fixture which is being proposed more and more often by interior designers to more discerning clientele.

As is known, glass sink tops with one or more built-in sinks comprise a flat sheet of glass of given thickness, deformed centrally to form one or more concavities of appropriate shape, each for collecting water from a tap. Each concavity defines a sink in the top, and has a contoured through hole in the bottom into which the water outlet pipe is inserted.

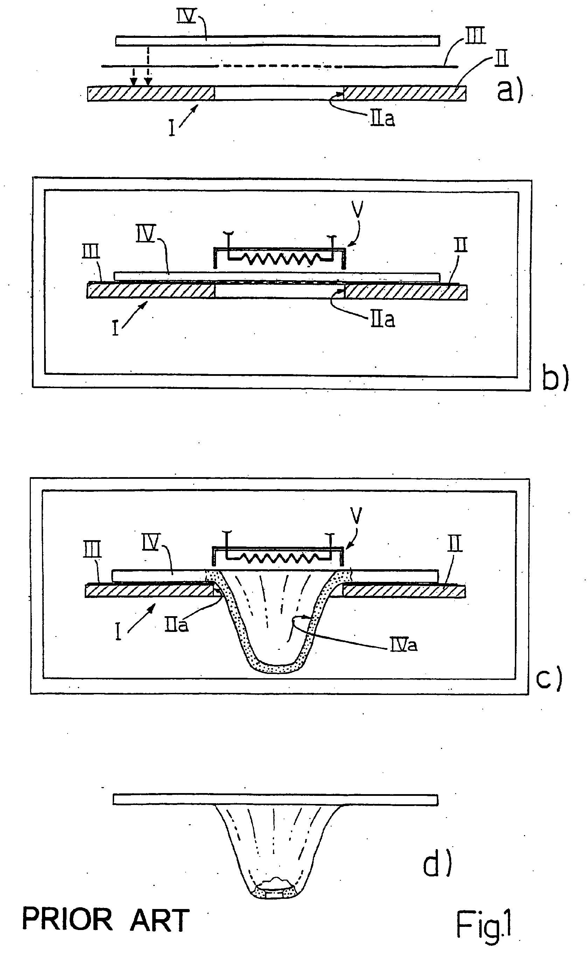

With reference to Figure 1, glass sink tops of the type described above are made from a perfectly flat sheet of glass, using a mold I made of high-temperature-resistant material and having a horizontal molding surface II with a central through opening IIa, the normally round or oval section of which depends on the shape of the sink to be formed in the sheet.

The production method currently employed comprises covering the molding surface II of mold I with one or more protective ceramic and/or glass fiber cloths III, and then placing on the molding surface II so covered a perfectly flat glass sheet IV of given thickness.

Mold I and glass sheet IV are then closed inside a molding oven in which the portion of glass sheet IV over opening IIa is heated by auxiliary heating elements V to the softening temperature of the glass, while the rest of glass sheet IV is maintained at a firming temperature slightly lower than the softening temperature, to prevent the sheet from cracking.

While inside the molding oven, the portion of glass sheet IV over opening IIa, being in a highly viscous, liquid state, is deformed by force of gravity to form a concavity IVa engaging opening IIa in molding surface II.

Once the concavity IVa is formed, the molding oven is turned off and glass sheet IV left inside to allow it to cool gradually to ambient temperature. Slow cooling of glass sheet IV inside the molding oven, in fact, is essential to prevent the formation of structural stress which could compromise the sheet.

Once cooled, glass sheet IV is removed from mold I and drilled and countersunk to form, in the bottom of cavity or cavities IVa, a contoured through hole into which the water outlet pipe is eventually inserted.

A major drawback of the above production method is that of producing sink tops with "pear-shaped" sinks which, besides accommodating very little water, are ineffective in containing splash produced by tap-water striking the bottom of the sink.

It is an object of the present invention to provide a method of producing glass sink tops with built-in sinks, which provides for obtaining sinks designed to eliminate the aforementioned drawbacks.

According to the present invention, there is provided a method of producing glass sink tops with built-in sinks and comprising a horizontal glass supporting surface and at least one glass sink which is formed in one piece with said horizontal supporting surface and comprises, at the bottom, a contoured through hole into which the end of the water outlet pipe is able to be inserted; said method comprising the steps of:
- heating at least one predetermined portion of a flat sheet of glass of given thickness to a softening temperature of the glass, so as to bring the material locally to a highly viscous liquid state;
- deforming said at least one predetermined portion of the sheet of glass to form a respective concavity; and
- cooling said sheet of glass slowly to bring the sheet of glass to a given ambient temperature;
said method being characterized in that said step of deforming said at least one predetermined portion of the sheet of glass comprises the step of maintaining, for a given time interval, a predetermined pressure difference in the air contacting the two opposite faces of said predetermined portion of the sheet of glass, and the step of producing, on the bottom of said concavity, a contoured portion so as to rough out the shape of said contoured through hole by means of a die on which comes to rest the bottom portion of said at least one predetermined portion of the sheet of glass in which said contoured through hole is later formed.

The main advantage of the method described above is that the roughing out the shape of contoured through hole when forming the concavity facilitates the subsequent forming of the contoured through hole. This solution also ensures a perfectly round contoured through hole and a perfect fit with the outlet pipe.

It is also an object of the present invention to provide a system for producing glass sink tops with built-in sinks, which provides for producing sinks designed to eliminate the aforementioned drawbacks.

According to the present invention, there is provided a system for producing glass sink tops with built-in sinks and comprising a horizontal glass supporting surface and at least one glass sink which is formed in one piece with said horizontal supporting surface and comprises, at the bottom, a contoured through hole into which the end of the water outlet pipe is able to be inserted; said system comprising a mold on which a flat sheet of glass of given thickness is placed; and at least one auxiliary heating element which is positioned at a respective predetermined portion of said sheet of glass to bring the sheet of glass locally to a given softening temperature of the glass; said mold forming a concavity of given shape in said predetermined portion of said sheet of glass; and the system being characterized by comprising means for maintaining a predetermined pressure difference in the air contacting the two opposite faces of said predetermined portion of the sheet of glass, and for the fact that said mold comprises a die able to deform a portion of the bottom of said concavity so as to rough out the shape of said contoured through hole.

A non-limiting embodiment of the present invention will be described by way of example with reference to the accompanying drawings, in which:
Figure 2 shows, schematically, a system for producing glass sink tops with built-in sinks, in accordance with the teachings of the present invention;
Figure 3 shows a view in perspective of a glass sink top obtained using the Figure 2 system;
Figure 4 shows, schematically, the various steps in the method implemented by the Figure 2 system to produce glass sink tops with built-in sinks;
Figures 5 and 6 show, schematically, respective variations of the Figure 2 system.

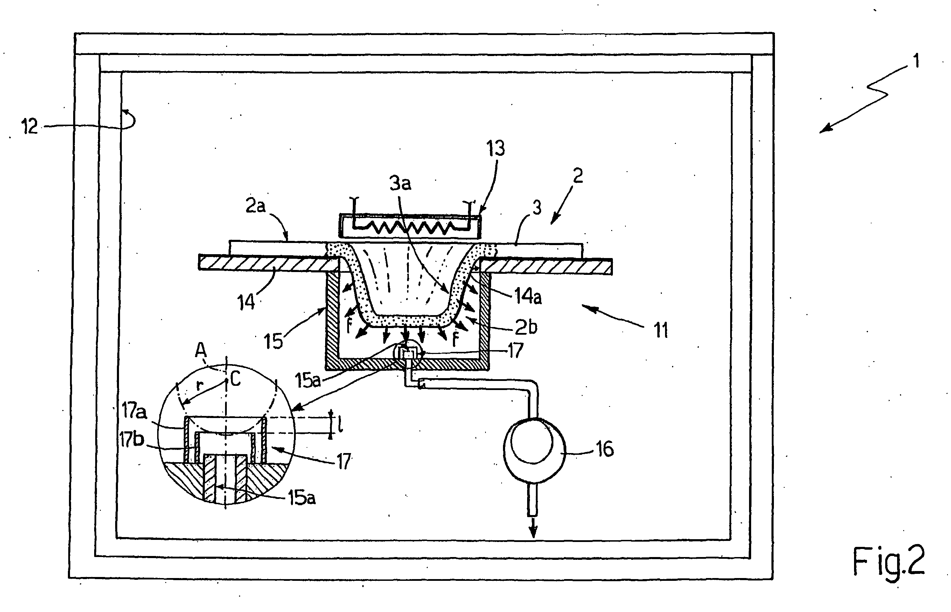

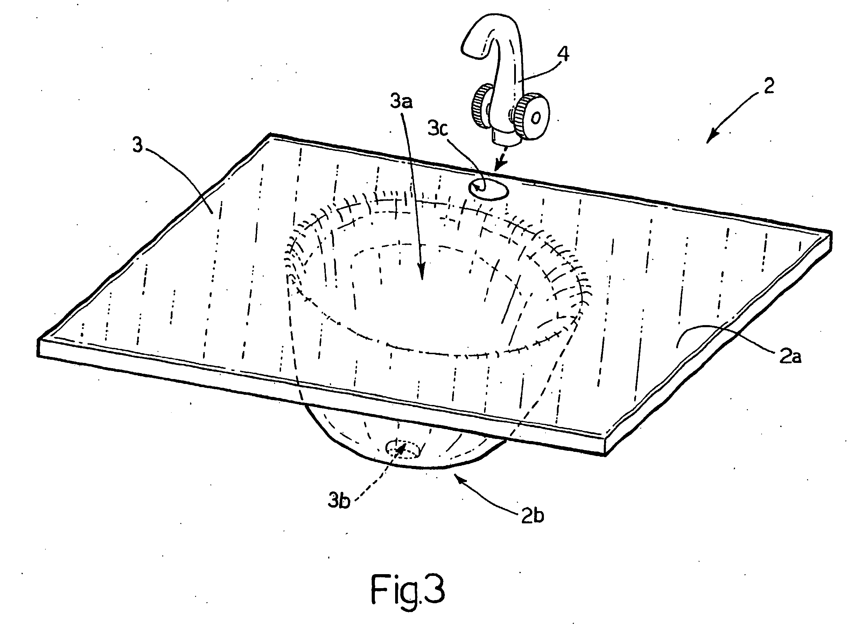

With reference to Figures 2 and 3, number 1 indicates as a whole a system for producing glass sink tops 2 comprising a horizontal glass supporting surface 2a, and one or more glass sinks 2b formed in one piece with horizontal supporting surface 2a.

More specifically, sink top 2 is defined by a flat sheet of glass 3 of predetermined thickness, deformed centrally to form one or more appropriately shaped concavities 3a (one in the Figure 3 example), each for collecting water issuing from a tap. Each concavity 3a defines a respective sink 2b in sink top 2, and comprises, at the bottom, a contoured through hole 3b into which the end of the water outlet pipe (not shown) is inserted.

With reference to Figure 3, the sheet of glass 3 preferably, though not necessarily, also has at least one second contoured through hole 3c formed in the flat portion of the sheet of glass 3, close to respective concavity 3a, and in which any known type of tap 4 is fitted.

With reference to Figure 2, system 1 for producing sink tops 2 with built-in sinks comprises: a mold 11, on which the sheet of glass 3 is positioned during the various processing steps to form concavity or concavities 3a; a molding oven 12 for bringing to and maintaining at a predetermined firming temperature the sheet of glass 3 and mold 11 on which the sheet is placed; and one or more auxiliary heating elements 13 positioned at the portion or portions of the sheet of glass 3 in which concavity or concavities 3a is or are to be formed, to heat the sheet of glass 3 locally to a softening temperature of the glass higher than said firming temperature.

With reference to Figures 2, 5 and 6, mold 11 is made of high-temperature-resistant material and comprises a horizontal molding surface 14 having one or more central openings 14a (one in the example shown), the section of which - preferably, though not necessarily, round or oval - depends on the shape of concavities 3a to be formed in the sheet of glass 3; and one or more cup-shaped containers 15 (one in the example shown), each of which is positioned with its opening corresponding with a respective opening 14a in molding surface 14.

Mold 11 also comprises at least one suction pump 16 which, on command, draws air out of cup-shaped containers 15 to keep the inside of cup-shaped containers 15 at a lower than outside pressure.

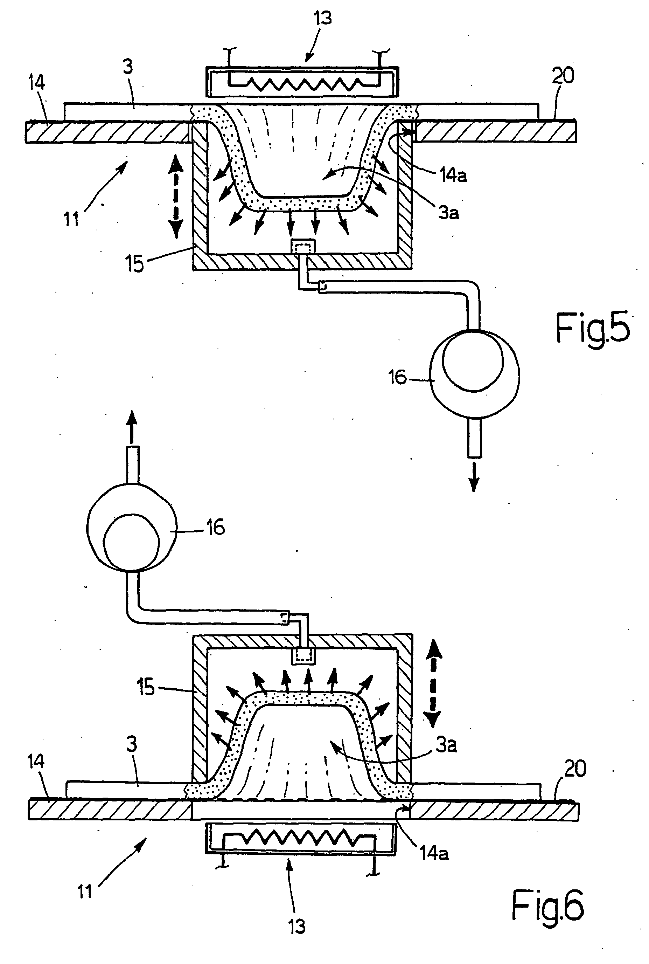

In a first embodiment, each cup-shaped container 15 is fixed permanently to the underside of molding surface 14 (Figure 2), at a respective opening 14a in molding surface 14; and, in a second embodiment, each cup-shaped container 15 is movable, with respect to molding surface 14, to and from a work position (Figures 5 and 6) resting on the sheet of glass 3, at respective opening 14a in molding surface 14.

In the latter case, mold 11 also comprises actuating means (not shown) for moving each cup-shaped container 15, on command, to and from the respective work position.

It should be pointed out that, in the second embodiment, each cup-shaped container 15 is movable perpendicularly to and indifferently below or above molding surface 14. In the first case, in the work position, each cup-shaped container 15 is positioned with its opening resting on the sheet of glass 3 and engaging a respective opening 14a in molding surface 14 (Figure 5). In the second case, in the work position, each cup-shaped container 15 is positioned with its opening resting on the sheet of glass 3, at respective opening 14a, but on the opposite side of the sheet of glass 3 to molding surface 14 on which the sheet of glass rests (Figure 6).

With particular reference to Figure 2, in the example shown, each cup-shaped container 15 is connected to suction pump 16 by an intake 15a, located on the bottom wall of cup-shaped container 15 and aligned with the point on the sheet of glass 3 at which contoured through hole 3b is later formed, and comprises at intake 15a a die 17 on which comes to rest the bottom portion of concavity 3a in which contoured through hole 3b is later formed.

More specifically, die 17 is so formed as to produce, on the bottom of concavity 3a as it is being formed, a contoured portion to facilitate the formation of contoured through hole 3b.

In the particular example shown, die 17 is defined by two cylindrical tubular elements 17a, 17b of different diameters and fixed coaxially with each other to the bottom of cup-shaped container 15. Cylindrical tubular elements 17a and 17b are oriented with their longitudinal axis A perpendicular to molding surface 14, and are of different lengths so that the larger-diameter cylindrical tubular element 17a projects beyond the end of the smaller-diameter cylindrical tubular element 17b by a portion of given length 1.

It should be pointed out that the diameters of the two cylindrical tubular elements 17a, 17b and length 1 of the portion of cylindrical tubular element 17a projecting beyond the axial end of cylindrical tubular element 17b are so selected as to produce, on the bottom of concavity 3a, a portion with a predetermined radius of curvature r and a predetermined center of curvature C. The location of center of curvature C and the value of radius of curvature r are so selected as to rough out the shape of contoured through hole 3b on the bottom of concavity 3a and so enable the hole to be formed more quickly and cheaply.

With reference to Figure 2, auxiliary heating elements 13 are of known type and normally defined by an electric resistor or free-flame gas burner enclosed in a cup-shaped metal shield of substantially the same shape as opening 14a in molding surface 14, i.e. the same shape as concavity 3a, and positioned with its opening facing the sheet of glass 3.

Molding oven 12, on the other hand, is of the type commonly used and therefore requires no further description.

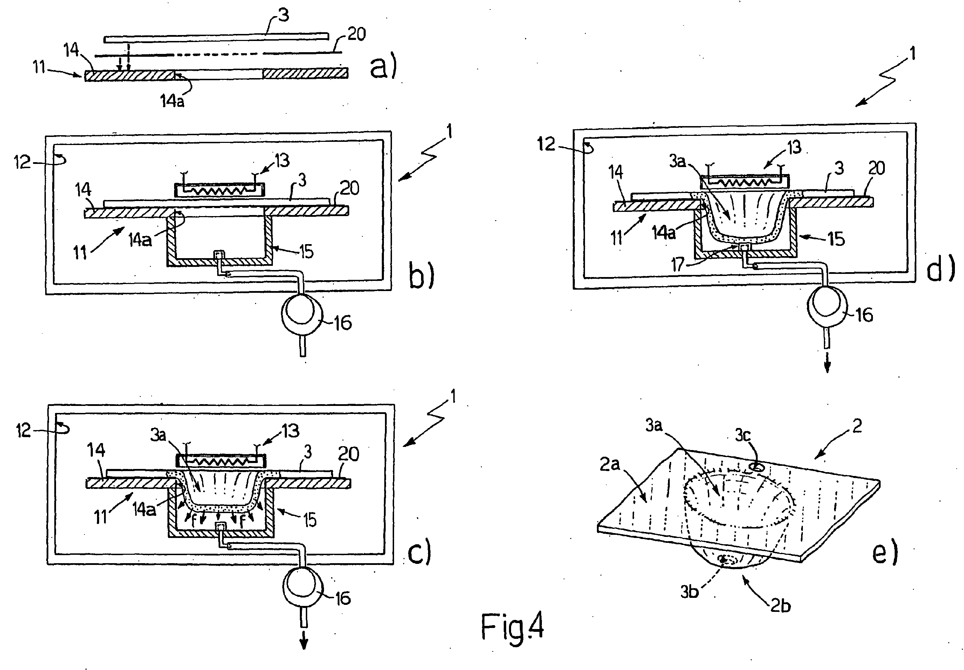

Operation of the system for producing glass sink tops 2 with built-in sinks will now be described with reference to Figure 4 and the production of a sink top 2 with one sink 2b.

To begin with, one or more protective ceramic and/or glass fiber cloths 20 are placed on molding surface 14 of mold 11.

A perfectly flat sheet of glass 3 of predetermined thickness (normally 6 to 32 mm) is then placed on molding surface 14, taking care to position the sheet of glass 3 so that the portion of the sheet in which concavity 3a is to be produced is positioned precisely over opening 14a in molding surface 14.

Once the sheet of glass 3 is positioned on molding surface 14, mold 11 and the sheet of glass 3 are closed inside molding oven 12, after first positioning an auxiliary heating element 13 over the portion of the sheet of glass 3 in which concavity 3a is to be formed.

Once the sheet of glass 3 is closed inside molding oven 12, the temperature in molding oven 12 is raised to bring the sheet of glass 3 to a predetermined firming temperature - in the example shown, about 540°C - within a predetermined time interval (e.g. 60 minutes).

Once the sheet of glass 3 is preheated, i.e. on reaching the firming temperature, auxiliary heating element 13 is turned on to gradually bring the portion of the sheet of glass 3 in which concavity 3a is to be formed to the melting temperature of the glass - in the example shown, at least 640°C.

When the portion of the sheet of glass 3 in which concavity 3a is to be formed reaches the melting temperature of the glass, suction pump 16 is turned on to keep the air inside cup-shaped container 15 at a lower than outside pressure.

Since protective cloths 20 act as seals to prevent any outside air from entering cup-shaped container 15 to compensate for the difference in pressure, the portion of the sheet of glass 3 in which concavity 3a is to be formed, being in a highly viscous, liquid state, is inevitably deformed by the forces generated by the difference in pressure of the air contacting the two faces of the sheet of glass 3 at the portion of sheet 3 at which concavity 3a is being formed.

Owing to the difference in pressure between the outer and inner surfaces of concavity 3a being formed, the portion of the sheet of glass 3 corresponding to concavity 3a is subjected to forces f locally perpendicular to the surface, and which tend to increase the inner volume of concavity 3a uniformly, in the same way as a rubber balloon filled with compressed air.

If movable with respect to molding surface 14, cup-shaped container 15 is set to the work position, and suction pump 16 is not turned on until the portion of the sheet of glass 3 in which concavity 3a is to be formed is positioned contacting the peripheral edge of the opening in cup-shaped container 15.

It should be pointed out that the time interval during which the two faces of the sheet of glass 3 are maintained at different pressures at opening 14a depends on the temperature to which the portion of the sheet of glass 3 corresponding to concavity 3a is heated, and on the difference in pressure between the outer and inner surfaces of that portion.

When the portion of the sheet of glass 3 corresponding to concavity 3a is deformed to the point of touching die 17 and so roughing out the shape of contoured through hole 3b on the bottom of concavity 3a, suction pump 16 is turned off.

Once concavity 3a is formed, molding oven 12 is turned off, and the sheet of glass 3 left inside to allow it to cool gradually to ambient temperature.

Once cooled, the sheet of glass 3 is removed from mold 11 and drilled and countersunk to form contoured through hole 3b and possibly also contoured through hole 3c and so obtain a sink top 2 with built-in sinks.

In certain cases, before and/or after forming contoured through hole 3b and contoured through hole 3c (if any), the sheet of glass 3 is again heated to firming temperature for a predetermined time interval to further reduce the likelihood of structural stress which may comprise the sheet of glass 3.

The production method described above has numerous advantages: in particular, it provides for obtaining sink tops 2 with much more rounded sinks 2b than those currently produced, and which therefore hold more water and provide for more effectively containing splash produced by water striking the bottom of the sink.

The method described also provides for producing sink tops more cheaply: by applying suction to the portion of the sheet of glass 3 in which concavity 3a is being formed, current operating temperatures can be lowered, thus reducing consumption of electricity and/or gas.

Lowering the operating temperature also provides for obtaining perfectly transparent sink tops 2 with no burn marks produced by the glass contacting the high-temperature mold.

Another advantage of the method described above is that of roughing out the shape of contoured through hole 3b when forming concavity 3a, thus drastically reducing the time and cost involved in subsequently forming contoured through hole 3b. This solution also ensures a perfectly round contoured through hole 3b and a perfect fit with the outlet pipe.

The method described above can also be used for simultaneously molding two superimposed sheets of glass to produce safer laminated glass sink tops 2.

Clearly, changes may be made to the system and method of producing glass sink tops 2 with built-in sinks as described and illustrated herein without, however, departing from the scope of the present invention.

In particular, in a first variation not shown, auxiliary heating elements 13 may be housed inside cup-shaped containers 15, which may be either integral with molding surface 14, or movable, with respect to molding surface 14, to and from the work position.

In a further variation not shown, auxiliary heating element 13 may be located behind cup-shaped container 15, in which case, the heat for heating the sheet of glass 3 locally to the softening temperature of the glass is transferred to the sheet of glass 3 by conduction through the body of cup-shaped container 15.

Finally, it should also be pointed out that suction pump 16 may be connected to cup-shaped container 15 to keep the inside of cup-shaped container 15 at a pressure higher than the surrounding pressure. In which case, at the portion of the sheet of glass 3 in which concavity 3a is being formed, a pressure difference is formed between the two faces of the sheet of glass 3, which tends to deform the sheet of glass 3 to form concavity 3a on the opposite side to cup-shaped container 15.

## Claims

1. A method of producing glass sink tops (2) with built-in sinks and comprising a horizontal glass supporting surface (2a) and at least one glass sink (2b) which is formed in one piece with said horizontal supporting surface (2a) and comprises, at the bottom, a contoured through hole (3b) into which the end of the water outlet pipe is able to be inserted; said method comprising the steps of:
- heating at least one predetermined portion (3a) of a flat sheet of glass (3) of given thickness to a softening temperature of the glass, so as to bring the material locally to a highly viscous liquid state;
- deforming said at least one predetermined portion (3a) of the sheet of glass (3) to form a respective concavity (3a); and
- cooling said sheet of glass (3) slowly to bring the sheet of glass to a given ambient temperature;
said method being **characterized in that** said step of deforming said at least one predetermined portion (3a) of the sheet of glass (3) comprises the step of maintaining, for a given time interval, a predetermined pressure difference in the air contacting the two opposite faces of said predetermined portion (3a) of the sheet of glass (3), and the step of producing, on the bottom of said concavity (3a), a contoured portion so as to rough out the shape of said contoured through hole (3b) by means of a die (17) on which comes to rest the bottom portion of said at least one predetermined portion (3a) of the sheet of glass (3) in which said contoured through hole (3b) is later formed.

2. A method of producing glass sink tops as claimed in Claim 1, **characterized by** comprising, prior to the step of heating said at least one predetermined portion (3a) of the sheet of glass (3) to said softening temperature of the glass, a preheating step in which the whole sheet of glass (3) is heated, within a given time, from ambient temperature to a given firming temperature.

3. A method of producing glass sink tops as claimed in Claim 2, **characterized in that**, prior to said preheating step, the sheet of glass (3) is placed on a molding surface (14) having at least one opening (14a), the section of which depends on the shape of the concavity (3a) to be formed in said sheet of glass (3); said sheet of glass (3) being positioned on said molding surface (14) so that said predetermined portion (3a) coincides with the opening (14a) in the molding surface (14).

4. A method of producing glass sink tops as claimed in Claim 3, **characterized by** comprising the step of placing on said molding surface (14) one or more protective cloths (20) of ceramic fiber and/or glass fiber before placing said sheet of glass (3) on the molding surface.

5. A method of producing glass sink tops as claimed in any one of the foregoing Claims, **characterized by** comprising, after the step of forming said concavity (3a), the step of cooling the said sheet of glass (3) gradually to ambient temperature.

6. A method of producing glass sink tops as claimed in Claim 5, **characterized by** comprising, after the step of cooling the said sheet of glass (3) gradually to ambient temperature, the step of drilling and countersinking the sheet of glass (3) to form said contoured through hole (3b).

7. A system for producing glass sink tops (2) with built-in sinks and comprising a horizontal glass supporting surface (2a) and at least one glass sink (2b) which is formed in one piece with said horizontal supporting surface (2a) and comprises, at the bottom, a contoured through hole (3b) into which the end of the water outlet pipe is able to be inserted; said system comprising a mold (11) on which a flat sheet of glass (3) of given thickness is placed, and at least one auxiliary heating element (13) which is positioned at a respective predetermined portion (3a) of said sheet of glass (3) to bring the sheet of glass (3) locally to a given softening temperature of the glass; said mold (11) forming a concavity (3a) of given shape in said predetermined portion (3a) of said sheet of glass (3); and the system being **characterized by** comprising means (15, 16) for maintaining a predetermined pressure difference in the air contacting the two opposite faces of said predetermined portion (3a) of the sheet of glass (3), and for the fact that said mold (11) comprises a die (17) able to deform a portion of the bottom of said concavity (3a) so as to rough out the shape of said contoured through hole (3b).

8. A system for producing glass sink tops as claimed in Claim 7, **characterized in that** said mold (11) comprises at least one cup-shaped container (15) which is positioned with its opening resting on said predetermined portion (3a) of the sheet of glass (3); and a pump unit (16) for keeping the air pressure inside the cup-shaped container (15) at a value other than the pressure outside the cup-shaped container (15), so as to produce and maintain a predetermined pressure difference in the air contacting the two opposite faces of said predetermined portion (3a) of the sheet of glass (3).

9. A system for producing glass sink tops as claimed in Claim 8, **characterized in that** said die (17) is located at the intake (15a) that connects the said pump unit (16) to the bottom wall of said cup-shaped container (15).

10. A system for producing glass sink tops as claimed in Claim 9, **characterized in that** said mold (11) comprises a molding surface (14) having, centrally, at least one opening (14a), the section of which depends on the shape of the concavity (3a) to be formed in the sheet of glass (3); said predetermined portion (3a) of the sheet of glass (3) being positioned at said opening (14a); and said cup-shaped container (15) being fixed to said molding surface (14) at said opening (14a) in the molding surface (14).

11. A system for producing glass sink tops as claimed in Claim 9, **characterized in that** said mold (11) comprises a molding surface (14) having, centrally, at least one opening (14a), the section of which depends on the shape of the concavity (3a) to be formed in the sheet of glass (3); said predetermined portion (3a) of the sheet of glass (3) being positioned at said opening (14a); and said cup-shaped container (15) being movable, with respect to said molding surface (14), to and from a work position in which the cup-shaped container is positioned with its opening resting on said predetermined portion (3a) of the sheet of glass (3).

## Patentansprüche

1. Verfahren zum Herstellen von Glasspülbeckenoberteilen (2) mit eingebauten Ausgüssen und umfassend eine horizontale Glassträgeroberfläche (2a) und zumindest ein Glasspülbecken (2b), welches in einem Teil mit der horizontalen Trägeroberfläche (2a) gebildet ist und zumindest am Boden ein konturiertes Durchgangsloch (3b) umfasst, in welches das Ende des Wasserauslassrohrs eingeführt werden kann; wobei das Verfahren die Schritte umfasst:
- Erwärmen zumindest eines vorbestimmten Abschnitts (3a) einer ebenen Platte aus Glas (3) einer gegebenen Dicke auf eine Erweichungstemperatur des Glases, um so das Material lokal in einen hoch-viskosen flüssigen Zustand zu bringen;
- Deformieren des zumindest einen vorbestimmten Abschnitts (3a) der Platte aus Glas (3), um eine jeweilige Wölbung (3a) zu bilden; und
- langsames Kühlen der Platte aus Glas (3), um die Platte aus Glas auf eine gegebene Umgebungstemperatur zu bringen;
- wobei das Verfahren **dadurch gekennzeichnet ist, dass** der Schritt des Deformierens des zumindest einen vorbestimmten Abschnitts (3a) der Platte aus Glas (3) den Schritt umfasst des Aufrechterhaltens für ein gegebenes Zeitintervall eines vorbestimmten Druckunterschieds in der Luft, welche zwei gegenüberliegende Flächen des vorbestimmten Abschnitts (3a) der Platte aus Glas (3) kontaktiert, und den Schritt des Herstellens eines konturierten Abschnitts auf dem Boden der Wölbung (3a), um so die Form des konturierten Durchgangslochs (3b) mittels einer Matrize (17) vorzubearbeiten, auf welche der Rest des Bodenabschnitts des zumindest einen vorbestimmten Abschnitts (3a) der Platte aus Glas (3) kommt, in welchem das konturierte Durchgangsloch (3b) später gebildet wird.

2. Verfahren zum Herstellen von Glasspülbeckenoberteilen wie in Anspruch 1 beansprucht, **gekennzeichnet durch** Umfassen, vor dem Schritt des Erwärmens des zumindest einen vorbestimmten Abschnitts (3a) der Platte aus Glas (3) auf die Erweichungstemperatur des Glases, eines Vorheizschrittes, in welchem die gesamte Platte aus Glas (3) innerhalb einer gegebenen Zeit von einer Umgebungstemperatur auf eine gegebene Verfestigungstemperatur erwärmt wird.

3. Verfahren zum Herstellen von Glasspülbeckenoberteilen wie in Anspruch 2 beansprucht, **dadurch gekennzeichnet, dass** vor dem Vorheizschritt die Platte aus Glas (3) auf einer Formoberfläche (14) angeordnet wird, welche zumindest eine Öffnung (14a) aufweist, deren Querschnitt von der Form der Wölbung (3a) abhängt, die in der Platte aus Glas (3) gebildet werden soll; wobei die Platte aus Glas (3) auf der Formoberfläche (14) positioniert wird, so dass der vorbestimmte Abschnitt (3a) mit der Öffnung (14a) in der Formoberfläche (14) übereinstimmt.

4. Verfahren zum Herstellen von Glasspülbeckenoberteilen wie in Anspruch 3 beansprucht, **gekennzeichnet durch** Umfassen des Schritts des Anordnens von einem oder mehreren Schutztüchern (20) aus Keramikfaser und/oder Glasfaser auf der Formoberfläche (14) bevor die Platte aus Glas (3) auf der Formoberfläche angeordnet wird.

5. Verfahren zum Herstellen von Glasspülbeckenoberteilen wie in irgend einem der vorhergehenden Ansprüche beansprucht, **gekennzeichnet durch** Umfassen des Schritts des graduellen Kühlens der Platte aus Glas (3) auf Umgebungstemperatur nach dem Schritt des Bildens der Wölbung (3a).

6. Verfahren zum Herstellen von Glasspülbeckenoberteilen wie in Anspruch 5 beansprucht, **gekennzeichnet durch** Umfassen des Schritts des Durchbohrens und Einsenkens der Platte aus Glas (3), um das konturierte Durchgangsloch (3b) zu bilden nach dem Schritt des graduellen Kühlens der Platte aus Glas (3) auf Umgebungstemperatur.

7. System zum Herstellen von Glasspülbeckenoberteilen (2) mit eingebauten Ausgüssen und umfassend eine horizontale Glasträgeroberfläche (2a) und zumindest einen Glasabguss (2b), welcher in einem Stück mit der horizontalen Trägeroberfläche (2a) gebildet ist und an dem Boden ein konturiertes Durchgangsloch (3b) umfasst, in welches das Ende des Wasserauslassrohrs eingeführt werden kann; wobei das System eine Form (11) umfasst, auf welcher eine ebene Platte aus Glas (3) von gegebener Dicke angeordnet wird, und zumindest ein Hilfsheizelement (13), welches an einem jeweiligen vorbestimmten Abschnitt (3a) der Platte aus Glas (3) positioniert wird, um die Platte aus Glas (3) lokal auf eine gegebene Erweichungstemperatur des Glases zu bringen; wobei die Form (11) eine Wölbung (3a) von gegebener Form in dem vorbestimmten Abschnitt (3a) der Platte aus Glas (3) bildet; und das System **gekennzeichnet ist durch** Umfassen von Einrichtungen (15, 16) zum . Aufrechterhalten eines vorbestimmten Druckunterschieds in der Luft, welche die zwei gegenüberliegenden Flächen des vorbestimmten Abschnitts (3a) der Platte aus Glas (3) kontaktiert, und aufgrund der Tatsache, dass die Form (11) eine Matrize (17) umfasst, welche in der Lage ist, einen Abschnitt des Bodens der Wölbung (3a) zu verformen, um so die Form des konturierten Durchgangslochs (3b) vorzubearbeiten.

8. System zum Herstellen von Glasspülbeckenoberteilen wie in Anspruch 7 beansprucht, **dadurch gekennzeichnet, dass** die Form (11) zumindest einen schalenförmigen Behälter (15) umfasst, welcher mit seiner Öffnung auf dem vorbestimmten Abschnitt (3a) der Platte aus Glas (3) lagernd positioniert ist; und eine Pumpeinheit (16) zum Halten des Luftdrucks im Inneren des schalenförmigen Behälters (15) auf einem Wert, welcher anders ist als der Druck außerhalb des schalenförmigen Behälters (15), um so einen vorbestimmten Druckunterschied in der Luft herzustellen und aufrechtzuerhalten, welche die zwei gegenüberliegenden Flächen des vorbestimmten Abschnitts (3a) der Platte aus Glas (3) kontaktiert.

9. System zum Herstellen von Glasspülbeckenoberteilen wie in Anspruch 8 beansprucht, **dadurch gekennzeichnet, dass** die Matrize (17) an dem Einlass (15a) angeordnet ist, der die Pumpeinheit (16) mit der Bodenwand des schalenförmigen Behälters (15) verbindet.

10. System zum Herstellen von Glasspülbeckenoberteilen wie in Anspruch 9 beansprucht, **dadurch gekennzeichnet, dass** die Form (11) eine Formoberfläche (14) umfasst, welche zentral zumindest eine Öffnung (14a) aufweist, deren Querschnitt von der Form der Wölbung (3a) abhängt, welche in der Platte aus Glas (3) gebildet werden soll; wobei der vorbestimmte Abschnitt (3a) der Platte aus Glas (3) in der Öffnung (14a) positioniert ist; und der schalenförmige Behälter (15) an der Formoberfläche (14) an der Öffnung (14a) in der Formoberfläche (14) fixiert ist.

11. System zum Herstellen von Glasspülbeckenoberteilen wie in Anspruch 9 beansprucht, **dadurch gekennzeichnet, dass** die Form (11) eine Formoberfläche (14) umfasst, welche zentral zumindest eine Öffnung (14a) aufweist, deren Querschnitt von der Form der Wölbung (3a) abhängt, die in der Platte aus Glas (3) gebildet werden soll; wobei der vorbestimmte Abschnitt (3a) der Platte aus Glas (3) an der Öffnung (14a) positioniert ist; und der schalenförmige Behälter (15) hinsichtlich der Formoberfläche (14) zu und von einer Arbeitsposition bewegbar ist, in welcher der schalenförmige Behälter mit seiner Öffnung auf dem vorbestimmten Abschnitt (3a) der Platte aus Glas lagernd positioniert ist.

## Revendications

1. Procédé de fabrication de planches d'éviers (2) en verre comprenant des éviers intégrés et avec une surface support (2a) en verre horizontal et au moins un évier (2b) en verre formé d'une seule pièce avec ladite surface support (2a) horizontale et comprenant, en partie inférieure, un trou traversant (3b) profilé, dans lequel l'extrémité du tube de sortie d'eau est en mesure d'être insérée ; ledit procédé comprenant les étapes consistant à :
- chauffer au moins une partie (3a) prédéterminée d'une feuille plate de verre (3) d'une épaisseur donnée à une température d'amollissement du verre pour placer le matériau localement à un état liquide fortement visqueux ;
- déformer ladite au moins une partie (3a) prédéterminée de la feuille de verre (3), pour former une concavité (3a) respective ; et
- refroidir ladite feuille de verre (3) lentement, pour amener la feuille de verre à une température ambiante donnée ;
ledit procédé étant **caractérisé en ce que** ladite étape de déformation de ladite au moins une partie (3a) prédéterminée de la feuille de verre (3) comprend l'étape de maintien, pour un intervalle de temps donné, d'une différence de pression prédéterminée dans l'air en contact avec les deux faces opposées de ladite partie (3a) prédéterminée de la feuille de verre (3), et l'étape de production, en partie inférieure de ladite concavité (3a), d'une partie profilé pour produire grossièrement la forme dudit trou traversant (3b) profilé, au moyen d'une matrice (17), sur laquelle vient reposer la partie inférieure de ladite au moins une partie (3a) prédéterminée de la feuille de verre (3), dans laquelle ledit trou traversant (3b) profilé est ultérieurement formé.

2. Procédé de fabrication de planche d'évier en verre, tel que revendiqué à la revendication 1, **caractérisé par** le fait de comprendre, avant l'étape de chauffage de ladite au moins une partie (3a) prédéterminée de la feuille de verre (3) à ladite température d'amollissement du verre, une étape de préchauffage, dans laquelle la feuille de verre (3) complète est chauffée, pendant une durée donnée, de la température ambiante à une température de solidification donnée.

3. Procédé de fabrication de planche d'évier en verre, tel que revendiqué à la revendication 2, **caractérisé en ce que**, avant ladite étape de préchauffage, la feuille de verre (3) est placée sur une surface de moulage (14) ayant au moins une ouverture (14a) dont la section dépend de la forme de la concavité (3a) à former dans ladite feuille de verre (3): la dite feuille de verre (3) étant positionnée sur ladite surface de moulage (14), de manière que ladite partie (3a) prédéterminée coïncide avec l'ouverture (14a) située dans la surface de moulage (14).

4. Procédé de fabrication de planche d'évier en verre, tel que revendiqué à la revendication 3, **caractérisé par** le fait de comprendre l'étape de placement sur ladite surface de moulage (14), un ou plusieurs tissus (20) protecteurs constitués de fibres de céramique et/ou de fibres de verre avant de placer ladite feuille de verre (3) sur la surface de moulage.

5. Procédé de fabrication de planche d'évier en verre, tel que revendiqué à l'une quelconque des revendications précédentes, **caractérisé par** le fait de comprendre, après l'étape de formation de ladite concavité (3a), l'étape de refroidissement de ladite feuille de verre (3) graduellement, jusqu'à la température ambiante.

6. Procédé de fabrication de planche d'évier en verre, tel que revendiqué à la revendication 5, **caractérisé par** le fait de comprendre, après l'étape de refroidissement de ladite feuille de verre (3), graduellement à la température ambiante, l'étape de perçage et de formation de contre-dépouille dans la feuille de verre 3, pour former ledit trou traversant (3b) profilé.

7. Système de fabrication de planche d'évier (2) en verre, avec des éviers intégrés et comprenant une surface support de verre (2a) horizontale, et au moins un évier (2b) en verre, formé d'une seule pièce avec ladite surface support (2a) horizontale et comprenant, en partie inférieure un trou traversant (3b) profilé, dans lequel l'extrémité des tubes de sortie d'eau est en mesure d'être insérée ; ledit système comprenant un moule (11) sur lequel une feuille de verre (3) plate, ayant une épaisseur donnée, est placée, et au moins un élément de chauffage auxiliaire (13), positionné en une partie (3a) prédéterminée respective de ladite feuille de verre (3), pour placer la feuille de verre (3) localement à une température d'amollissement donnée du verre ; ledit moule (11) formant une concavité (3a) de forme donnée dans ladite partie (3a) prédéterminée de ladite feuille de verre (3) ; et le système étant **caractérisé par** le fait de comprendre des moyens (15,16) de maintien d'une différence de pression prédéterminée dans l'air en contact avec les faces opposées de ladite partie (3a) prédéterminée de la feuille de verre (3), et par le fait que ledit moule (11) comprend une matrice (17) en mesure de déformer une partie de la partie inférieure de ladite concavité (3a) grossièrement à la forme dudit trou traversant (3b) profilé.

8. Système de fabrication de planches d'évier en verre, tel que revendiqué à la revendication 7, **caractérisé en ce que** ledit moule (11) comprend au moins un récipient (15) en forme de coupe, positionné avec son ouverture reposant sur ladite partie (3a) prédéterminée de la feuille de verre (3) ; et une unité de pompage (16) pour maintenir la pression d'air à l'intérieur du récipient (15) en forme de coupe à une valeur différente de la pression à l'extérieur du récipient (15) en forme de coupe, pour produire et maintenir une différence de pression prédéterminée dans l'air en contact avec les deux faces opposées de ladite partie (3a) prédéterminée de la feuille de verre (3).

9. Système de fabrication de planches d'évier en verre, tel que revendiqué à la revendication 8, **caractérisé en ce que** ladite matrice (17) est placée à l'admission (15a), reliant ladite unité de pompage (16) à la paroi inférieure dudit récipient (15) en forme de coupe.

10. Système de fabrication de planches d'évier en verre, tel que revendiqué à la revendication 9, **caractérisé en ce que** ledit moule (11) comprend une surface de moulage (14), ayant centralement au moins une ouverture (14a), dont la section dépend de la forme de la concavité (3a) à former dans la feuille de verre (3); ladite partie (3a) prédéterminée de la feuille de verre (3) étant positionnée à ladite ouverture (14a) et ledit récipient (15) en forme de coupe étant fixé sur ladite surface de moulage (14) à ladite ouverture (14a) dans la surface de moulage (14).

11. Système de fabrication de planches d'évier en verre, tel que revendiqué à la revendication 9, **caractérisé en ce que** ledit moule (11) comprend une surface de moulage (14) ayant, centralement, au moins une ouverture (14a), dont la section dépend de la forme de la concavité (3a) à former dans la feuille de verre (3) ; ladite partie (3a) prédéterminée de la feuille de verre (3) étant positionnée à ladite ouverture (14a) ; et ledit récipient (15) en forme de coupe étant déplaçable par rapport à ladite surface de moulage (14), en rapprochement ou en éloignement d'une position de travail à laquelle le récipient en forme de coupe est positionné avec son ouverture reposant sur ladite partie (3a) prédéterminée de la feuille de verre (3).
